**Europäisches Patentamt**

**European Patent Office**

**Office européen des brevets**

(19)

(11) Numéro de publication: **0 033 709**
**B1**

(12) # FASCICULE DE BREVET EUROPEEN

(45) Date de publication du fascicule du brevet:
**02.05.85**

(51) Int. Cl.⁴: **G 01 N  1/10,** G 01 N  33/14

(21) Numéro de dépôt: **81440006.5**

(22) Date de dépôt: **05.02.81**

(54) **Appareil autonome de prélèvement isobarométrique pour prise d'échantillons sur boissons gazeuses.**

(30) Priorité: **05.02.80  FR 8002743**

(43) Date de publication de la demande:
**12.08.81 Bulletin 81/32**

(45) Mention de la délivrance du brevet:
**02.05.85 Bulletin 85/18**

(84) Etats contractants désignés:
**AT DE GB NL SE**

(56) Documents cités:
**FR - A - 2 187 115**
**FR - A - 2 379 816**
**FR - A - 2 410 824**

(73) Titulaire: **Brasseries KRONENBOURG Société dite :
S.A., 68, Rte d'Oberhausbergen, F-67200 Strasbourg
(FR)**

(72) Inventeur: **Bauer, Gilbert, 110, RUE PRINCIPALE
LAUBENHEIM MOLLKIRCH, F-67190 Mutzig (FR)**
Inventeur: **Maurer, Michel, 8, CHEMIN DES MERLES,
F-67100 STRASBOURG (FR)**

(74) Mandataire: **Metz, Paul, Cabinet METZ PATNI 95, rue de
la Ganzau, F-67100 Strasbourg (FR)**

ACTORUM AG

# Description

L'invention se rapporte à un appareil de prélèvement à pression constante pour la prise d'échantillons sur boissons gazeuses par exemple en cours de fermentation en particulier dans une cuve de fermentation de bière ou sur fût de bière à la pression pour contrôle de qualité sur la bière terminée.

Lors de la prise d'échantillons dans une cuve de fermentation de boissons gazeuses en particulier de bière, deux règles importantes sont à observer. Tout d'abord, il convient d'effectuer le prélèvement en prenant toutes les précautions nécessaires pour éviter la formation de mousse de manière à ne modifier ni la teneur en gaz carbonique de l'échantillon, ni celle en corps volatils liés au goût. Il convient aussi de réduire le plus possible les perturbations engendrées à l'intérieur de la cuve de fermentation c'est-à-dire les variations de paramètres importants tels que la température, la pression ... provoquées par la prise de l'échantillon de manière à ne pas perturber le déroulement normal du phénomène biologique.

Jusqu'à présent, on prélevait l'échantillon de bière d'une cuve de fermentation par une dérivation formée d'un serpentin traversant un bac de refroidissement.

Malgré le ralentissement procuré par le passage dans le serpentin et le soin que l'on observait dans les mesures, il arrivait pratiquement systématiquement que la bouteille contienne une proportion de mousse suffisante pour fausser les mesures. Pour transmettre les échantillons sans mousse au laboratoire, il fallait remplir les bouteilles à ras bord et faire déborder la mousse. En effet, la mousse indique l'existence de gaz carbonique dissous, par conséquent sa présence est signe de perte en gaz carbonique et donc source d'indications erronées quant au taux de gaz dissous et de corps volatils.

De plus, l'air présent dans la bouteille lors du remplissage provoque une légère oxydation de la bière qui altère sa composition et fausse les résultats des mesures qui deviennent non représentatifs. Par exemple, l'oxydation provoque la transformation de l'acétolactacte en diacéthyle, source de faux goût. Cette oxydation s'avère d'autant plus gênante que l'on exploite des mesures particulièrement précises données par un matériel d'analyse fort coûteux. Bien entendu, la précision de ces mesures n'est d'aucune utilité si les valeurs sont modifiées dans des proportions bien supérieures.

Il existe toutefois des appareils plus complets comme ceux décrits ci-après.

Ainsi, le brevet français KRONENBOURG n° 2 410 824 qui se rapporte au prélèvement d'un échantillon de bière sur une cuve de fermentation et à sa préparation en vue de l'analyse chromatographique des corps volatils.

L'appareil selon cette invention réalise l'alimentation automatique d'une colonne chromatographique à partir d'un échantillon de bière prélevé sur une ou plusieurs cuves de fermentation en parallèle.

On remarque, dans cet appareil, deux fonctions simultanées: le prélèvement et la préparation de l'échantillon.

Il se compose d'un conduit ou d'un réseau de conduits raccordé(s) d'une part à la ou aux cuves de fermentation et, d'autre part, à un bac réfrigérant communiquant par un conduit d'amenée avec un récipient de préparation isolé thermiquement de l'extérieur par une jaquette contenant un liquide à température thermostatée. Le conduit d'amenée pénètre dans le récipient par le haut et descend le long de sa paroi pour déboucher en partie inférieure tangentiellement à son fond.

Le récipient comporte en partie supérieure un orifice d'entrée par le conduit d'amenée, un orifice de sortie relié au chromatographe et un passage central pour le passage d'un tube d'alimentation en gaz neutre débouchant au fond du récipient.

Dans cette invention, on refroidit l'échantillon pour diminuer la formation de mousse, de plus, on l'injecte dans le récipient tangentiellement à son fond. Par ailleurs, le gaz neutre est utilisé uniquement comme moyen de propulsion vers le chromatographe et, à aucun moment on ne cherche à remplir le récipient à contre pression pour éviter ou réduire la formation de mousse.

D'autres appareils ou installations ont été proposés comme l'invention décrite dans le brevet français TEPRAL n° 2 379 816 pour un procédé et une installation pour le prélèvement automatique d'échantillons de bière à analyser.

Cette invention se propose de réaliser une surveillance générale et complète de tous les paramètres caractéristiques de la fermentation de la bière, température, pression, pH, taux d'oxygène dissous en vue de la conduite automatique du procédé de fabrication.

L'installation comprend un circuit de prélèvement séquentiel, un ensemble de regroupement, un bac de réfrigération et une vanne d'échantillonnage destinée à envoyer un échantillon élémentaire à intervalle de temps déterminé dans l'ensemble de mesure formé soit d'une chaîne à plusieurs capteurs successifs reliés à leur propre appareil, soit un groupement de capteurs dans une enceinte de mesure en liaison avec un analyseur chromatographique en phase gazeuse. Un dispositif de laminage du fluide à organe d'obturation mobile est placé en fin de chaîne.

Cette installation comporte pour le prélèvement et la préparation de l'échantillon les moyens suivants: des piquages à différents niveaux sur les cuves, un regroupement des circuits de prélèvement, un bac réfrigérant et une vanne d'échantillonnage. La réduction de formation de mousse est réalisée ici également par refroidissement.

Le brevet français STÉ NATIONALE DES PÉTROLES D'AQUITAINE n° 2 187 115 se rapporte à un appareil à placer dans une installation pour le prélèvement d'un liquide en cours d'écoulement.

L'originalité de cette invention consiste à avoir lié le débit de prélèvement à celui du liquide à échantillonner, de manière à réduire les perturbations engendrées par l'opération de prélèvement.

L'installation comprend plusieurs flacons remplis d'un fluide auxiliaire non miscible à l'échantillon et inerte par rapport à lui. Chaque flacon est relié à une pompe aspirante à débit réglable asservi au débimètre placé sur le canal d'écoulement. Chaque flacon est relié au récipient par un tube conformé en siphon.

Il s'agit simplement d'une installation de remplissage utilisant le prélèvement par siphonnage. On aspire le liquide auxiliaire qui engendre une dépression d'appel pour le liquide que doivent contenir les flacons.

On ne cherche pas, dans cette invention, à diminuer la formation de mousse, mais à aspirer sans perturbation. Or, dans les cuves de fermentation de la bière, le liquide est légèrement en surpression.

Pour pallier l'inconvénient de la perturbation de pression et corrélativement diminuer la formation de mousse, on a prévu de remplir des bouteilles de prélèvement par une canule double avec obturation de la bouteille à débit réglable à travers une soupape de décharge tarée en pression, par exemple à 500 g.

Ce dispositif permet effectivement de réduire de façon notable la formation de mousse pendant le remplissage par un prélèvement qui s'effectue à pression à peu près constante.

Ce dispositif engendre tout de même une légère formation de mousse lors de la montée en pression jusqu'à la valeur du tarage et en cours de remplissage lors de l'ouverture de la soupape, ainsi qu'en fin de remplissage lors de la mise à l'atmosphère.

Ce dispositif ne permet pas d'utiliser toute l'efficacité et toute la précision des appareils de mesure et de contrôle de laboratoire.

La présente invention se rapporte plus particulièrement à une prise manuelle d'échantillons en vue de son analyse en laboratoire à l'aide d'un appareil portatif autonome.

L'invention a pour but de remédier à ces inconvénients en proposant un appareil de prélèvement qui réalise le remplissage du récipient recevant l'échantillon à contre pression constante sous gaz neutre. Ce but est atteint à l'aide d'un appareil tel que défini dans la revendication 1. L'utilisation de cet appareil montre qu'il permet un remplissage totalement exempt de mousse, ce qui réduit notablement les pertes en gaz carbonique et en corps volatils de l'échantillon.

Les caractéristiques et avantages apparaîtront à la lecture de la description qui suit d'un mode de réalisation de l'invention, en référence aux dessins annexés dans lesquels:

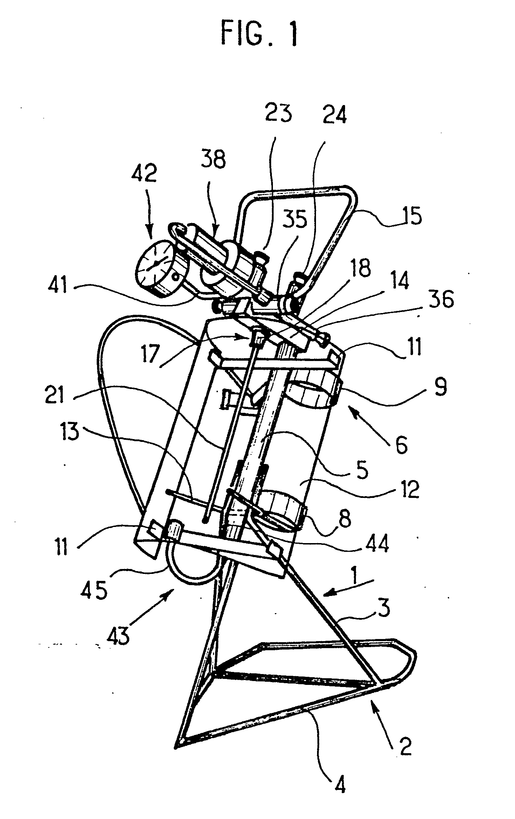

la fig. 1 est une vue générale en perspective de l'appareil de prélèvement selon l'invention côté avant;

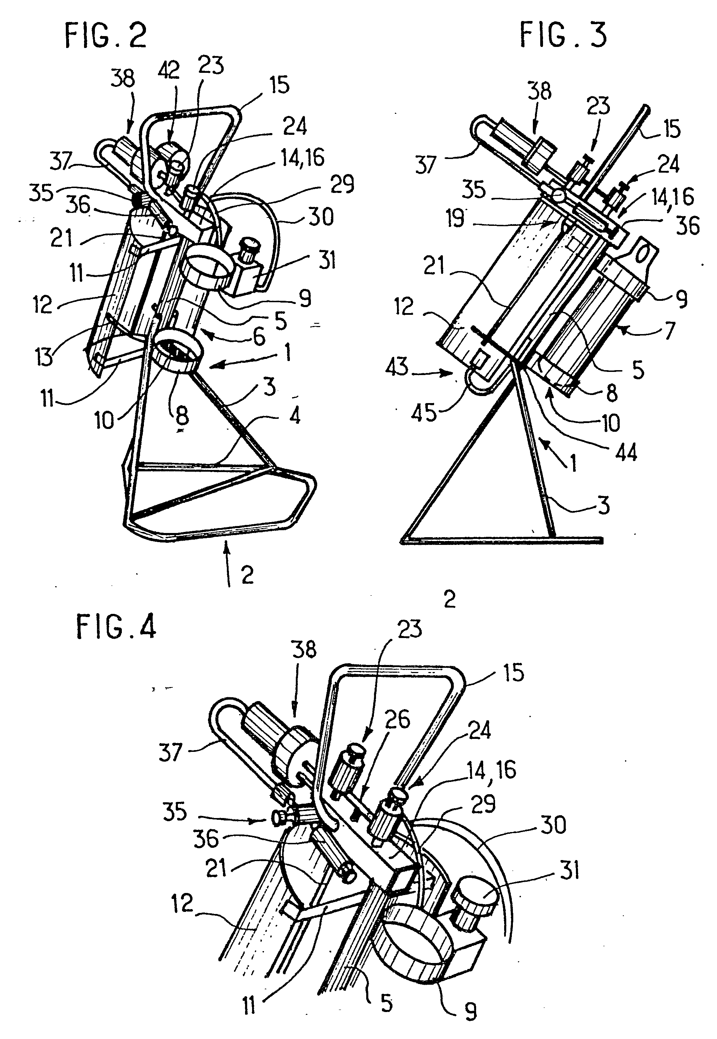

la fig. 2 est une vue générale en perspective de l'appareil de prélèvement selon l'invention côté arrière;

la fig. 3 est une vue de profil de l'appareil de prélèvement selon l'invention;

la fig. 4 est une vue de détail en perspective de la partie supérieure;

la fig. 5 est une vue schématique en coupe de la tête de distribution.

les figs 6a et 6b sont des schémas de branchements pour prélèvement respectivement sur cuve de fermentation et sur fût.

L'appareil de prélèvement isobarométrique selon l'invention se compose tout d'abord d'un bâti support 1, par exemple en tubes métalliques soudés constitué d'une assise 2 sous forme d'un trépied 3 solidaire d'une base triangulaire 4, d'un tronc central incliné 5 sur lequel est rapporté en partie arrière un support 6 pour une bouteille de gaz inerte sous pression telle que 7. Sur l'avant ce support est formé par exemple de deux anneaux parallèles 8 et 9 formant collier. L'anneau inférieur 8 comporte une traverse 10 sur laquelle prend appui le fond de la bouteille.

Cette alimentation rend l'appareil selon l'invention entièrement autonome. Le tronc central 5 porte, solidarisés à sa face antérieure, deux fers plats en U tels que 11 servant de supports de fixation à un capot bombé 12 réalisé de préférence en matière plastique transparente. Une fourche additionnelle 13 assure la protection contre les chocs.

Un bloc 14 est monté solidaire de l'extrémité supérieure du tronc central 5. De forme générale parallélépipédique, il assure sur le plan mécanique la liaison entre le bâti 1 et une poignée 15 solidaire dudit bloc à environ mi-distance de son extrémité pour des raisons de position du centre de gravité.

Ce bloc forme tête de distribution 16.

Il présente en sous-face une naissance 17 de forme conique à joint d'étanchéité 18 destinée à constituer le bouchon obturateur 19 du récipient de mesure (20). Ce bouchon est prolongé en position centrale par une canule d'injection 21 de longueur telle que son extrémité se situe à une distance du fond de la bouteille de l'ordre du quart de sa longueur.

Ce bouchon présente en plus un orifice concentrique d'évacuation 22 servant de passage d'échappement au gaz liquide injecté, en communication sélective avec l'évier ou avec l'atmosphère.

La tête de distribution 16 comporte, en partie supérieure, deux robinets d'admission 23 et 24 respectivement d'azote et de bière. Ils règlent le débit d'azote ou de bière arrivant dans une chambre commune intérieure 25 par l'intermédiaire d'un pont en T 26 à conduit commun d'admission 27 débouchant dans le récipient de mesure 20 par un conduit séparé 28 prolongé par la canule 21. Le gaz et le liquide arrivent latéralement à la chambre par des conduits d'alimentation 29 et 30 raccordés à un manodétendeur 31 recevant d'une part le gaz en provenance de la bouteille et d'autre part la bière de la cuve de fermentation ou du fût.

La communication intérieure entre les arrivées en gaz et en liquide et les robinets d'admission et de règlage 23 et 24 est assurée par des conduits intérieurs distincts respectivement 32 et 33.

La tête de distribution comporte une sortie latérale 34 se prolongeant par un robinet 35 de mise en pression à deux sorties latérales, la première en communication avec l'atmosphère par l'intermédiaire d'une purge 36 à vis micrométiaire et l'autre raccordée par un conduit 37 à l'entrée de commande d'une vanne de régulation 38 à membrane 39 réglant le débit du circuit d'évacuation 40 et passant par la chambre intérieure commune reliant l'orifice concentrique 22 à l'évier à travers la vanne.

La vanne de régulation 38 obture plus ou moins ou totalement le circuit d'évacuation 40 reliant l'orifice 22 à l'évier selon la pression de commande appliquée sur sa menbrane 39 transmise par le conduit 37.

Sur cette chambre se greffe un conduit de mesure 41 aboutissant à un manomètre 42.

Le conduit d'injection 28, en liaison avec le conduit d'admission, communique avec la canule d'injection 21.

Un dispositif de serrage 43 permet de maintenir le goulot de la bouteille de prélèvement 20 contre le bouchon obturateur 19.

Ce dispositif est constitué par exemple par un organe 44 réglable en rapprochement ou en éloignement terminé par une extrémité pleine ou en forme de canne 45 en contact de poussée avec le fond légèrement creux de la bouteille de prélèvement.

On expliquera maintenant ci-après les différentes phases de fonctionnement de l'appareil de prélèvement selon l'invention.

On monte le récipient de mesure 20 sur son support en passant la canule 21 dans le goulot, on applique le goulot contre le joint 18 du bouchon obturateur 19, on maintient la bouteille et on l'appuie fortement contre le joint d'étanchéité grâce au dispositif de serrage 44 par exemple à canne.

On purge la bouteille de son air en la saturant par injection d'azote sous pression. Pour ce faire, on ouvre le robinet d'admission d'azote 23. L'azote pénètre dans la bouteille à travers la canule 21 et en ressort par l'orifice concentrique 22 du bouchon obturateur.

L'évacuation de l'azote vers l'évier est permise par la vanne de régulation 38 qui est passante pour avoir laissé ouvert le robinet de mise en pression 35.

La phase de purge étant terminée, on procède à la phase de remplissage.

On coupe la communication 40 avec l'évier en agissant sur le robinet de mise en pression 35. La membrane 39 de la vanne de régulation 38 ferme par pression la liaison avec l'évier. L'azote est admis jusqu'à ce qu'il règne dans la bouteille de prélèvement une pression voisine de celle existant dans la cuve de fermentation ou dans le fût que l'on connaît approximativement par sa valeur théorique. (Celle-ci est affichée au manomètre 42) on l'ajuste en baisse à l'aide de la purge 36 à vis micrométrique.

On ferme l'arrivée d'azote. La phase de mise en contrepression est terminée, on procède au remplissage proprement dit.

Pour ce faire, on ouvre le robinet 24 d'admission de bière. Le remplissage s'effectue lentement du fait de la contrepression d'azote ne laissant subsister qu'une faible différence de pression.

Aucune formation de mousse n'apparaît. On remplit la bouteille jusqu'à débordement. Le trop plein de bière est évacué à l'évier par l'intermédiaire de la liaison 40 à travers la vanne de régulation 38 que l'on a rendue passante.

On effectue le dégazage progressif par mise à l'atmosphère à l'aide de la vis micrométrique de purge 36.

Il suffit alors de dégager le récipient de mesure 20 de le sortir de l'appareil et de le boucher.

Elle est prête à l'analyse. Son contenu représente fidèlement le liquide présent à l'intérieur de la cuve de fermentation ou du fût. On s'affranchit ainsi aussi bien des perturbations extérieures dues au prélèvement que des perturbations induites à l'intérieur de la cuve ou du fût produites par l'opération même du prélèvement.

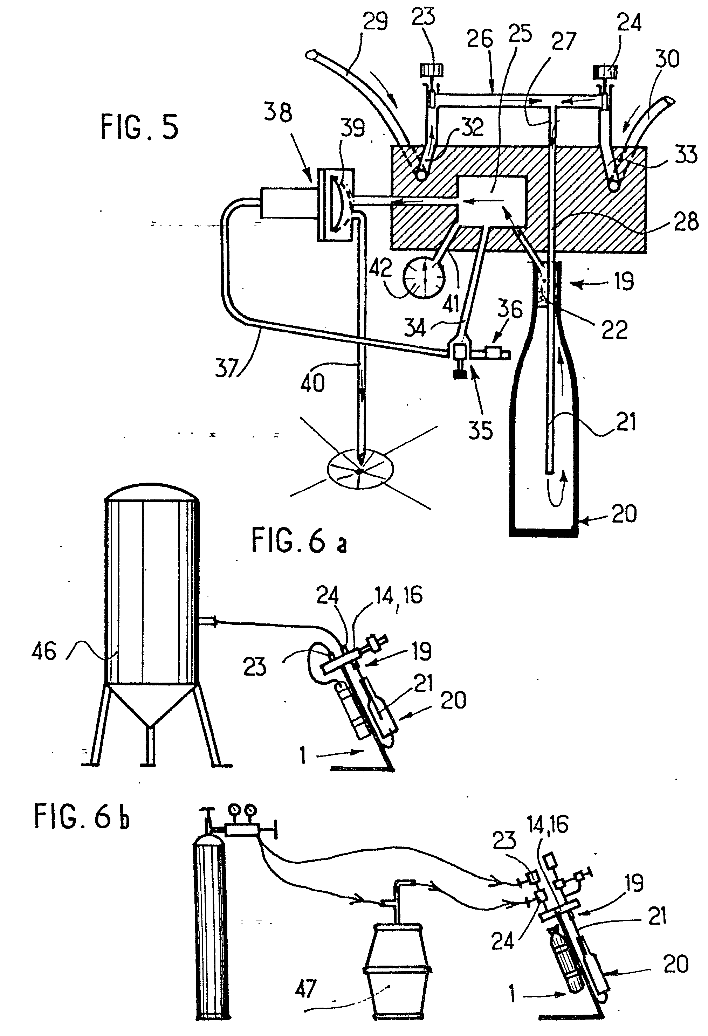

L'invention permet de prélever un échantillon sur cuve de fermentation 46 mais aussi sur fût à bière 47 tel que le montrent les figs 6a et 6b.

**Revendications**

1. Appareil autonome et portatif pour le prélèvement à pression constante d'échantillons liquides dans les cuves de préparation ou de stockage de boissons gezeuses en particulier dans les cuves de fermentation de la bière; appareil présentant un corps formé d'un trépied (3), d'un tronc central incliné (5) sur lequel est rapporté en partie arrière un premier support (6) pour une bouteille (7) de gaz inerte sous pression, ledit tronc central étant monté sur le trépied et supportant un récipient de mesure (20); le tronc central se prolongeant vers le haut par une tête de distribution (16) terminée par une poignée de préhension (15) caractérisé en ce que la tête de distribution (16) affecte la forme d'un bloc comprenant une chambre intérieure (25) et présentant, en sa partie supérieure, deux robinets (23, 24) respectivement pour l'admission de gaz et pour le réglage de débit du liquide prélevé et, sur ses parois latérales, des arrivées (29, 30) de liquide et de gaz dans le récipient de mesure (20) à travers les robinets (23, 24) et en ce que la chambre intérieure (25) relie la sortie du dit récipient de mesure (20), d'une part à l'évacuation à travers une vanne de régulation (38) à commande pneumatique et un circuit d'évacuation (40) et, d'autre part, à l'atmosphère à travers un robinet de mise en pression (35) à trois voies dont une relie la chambre intérieure (25) à la commande pneumatique de la vanne de régulation (38) et en ce que le tronc central (5) présente, sur l'avant, un second support pour le récipient de mesure (20), le premier support (6) pour la bouteille (7) de gaz inerte servant au dégazage et étant prévu sur l'arrière dudit tronc central (5).

2. Appareil selon la revendication 1, caractérisé en ce que la vanne de régulation (38) est du type à membrane réglant le débit et la pression dans le circuit d'évacuation (40) de la chambre intérieure (25) par commande pneumatique sur la membrane à partir de la chambre intérieure (25) à travers le robinet de mise en pression (35) par le conduit (37).

3. Appareil selon la revendication 1, caractérisé en ce que l'ensemble de distribution présente, en sous face, un bouchon obturateur (19) à joint d'étanchéité (18) sur lequel vient se plaquer le goulot du récipient de mesure et en ce que le bouchon obturateur (19) porte en son centre une canule d'injection (21) et un passage concentrique (22) pour l'évacuation.

4. Appareil selon les revendications 1 et 3, caractérisé en ce que le récipient de mesure (20) est appliqué contre le bouchon obturateur (19) par des moyens de serrage (43) formés d'un organe (44) réglable en rapprochement ou en éloignement terminé par une extrémité en plateau ou en bout de canne (45) venant en contact de poussée avec le fond légèrement rentrant de la bouteille de prélèvement.

5. Appareil selon la revendication 3, caractérisé en ce que la longueur de la canule d'injection (21) est de l'ordre des trois quarts de la hauteur totale de la bouteille de prise d'échantillon.

6. Appareil selon la revendication 1, caractérisé en ce que sur la chambre intérieure commune (25) se greffe un conduit de mesure aboutissant à un manomètre (42).

7. Appareil selon la revendication 1, caractérisé en ce que le support (6) est formé de deux anneaux parallèles (8) et (9) formant collier, l'anneau inférieur (8) comportant une traverse (10) sur laquelle prend appui le fond de la bouteille de gaz.

8. Appareil selon la revendication 1, caractérisé en ce que le support du récipient de mesure est protégé par un capot bombé transparent (12).

## Claims

1. Self-contained and portable apparatus for the removal at constant pressure of liquid samples contained in preparation or storage vessels for aerated drinks, especially contained in fermentation vessels for beer, the apparatus having a body in the form of tripod (3), an inclined central trunk (5) to the rear part of which is fixed a first support (6) for a cylinder (7) of an inert gas under pressure, the said central trunk being mounted on the tripod and supporting a measuring container (20), the central trunk extending upwards by a distribution head (16) terminated by a hand grip (15), characterised in that the distribution grip (15), characterised in that the distribution head (16) takes the form of a unit having an internal chamber (25) and having on its upper part two taps (23, 24), respectively for the inlet of gas and the control of the flow of sampled liquid and, on its lateral walls, inlets (29, 30) for liquid and for gas in the measuring chamber via the taps (23, 24) and in that the internal chamber (25) connects the outlet of the said measuring container (20) both to the evacuation via a pneumatically operated regulating valve (38) and an evacuation circuit and also to the atmosphere via a three-way pressurising valve (35) of which one way connects the internal chamber (25) to the pneumatic control of the regulating valve (38), and in that the central trunk (5) has at the front a second support for the measuring container (20), the first support (6) for the inert gas cylinder (7) serving for degassing and being provided at the rear of the said central trunk (5).

2. Apparatus according to claim 1, characterised in that the regulating valve (38) is of the membrane type, regulating the flow and the pressure in the evacuation circuit (40) of the internal chamber (25) by pneumatic control of the membrane from the internal chamber (25) via the pressurising valve (35) by the conduit (37).

3. Apparatus according to claim 1, characterised in that the distribution assembly has, on its underneath surface, a closure stopper (19) with a fluid-tight seal (18) on which the neck of the measuring container engages and in that the closure stopper (19) carries in the centre an injection cannula (21) and a concentric passage (22) for evacuation.

4. Apparatus according to claims 1 to 3 characterised in that the measuring container (20) is applied against the closure stopper (19) by locking means (43) formed by a member (44) which is controllably displacable back and forth limited by an extremity in the form of a plate or the end of a rod (45) which comes into pushing contact with the base slightly entering the sampling bottle.

5. Apparatus according to claim 3, characterised in that the length of the injection cannula (21) is of the order of three quarters of the total height of the sampling bottle.

6. Apparatus according to claim 1, characterised in that a measuring conduit terminating in a manometer (42) is formed on the common internal chamber (25).

7. Apparatus according to claim 1, characterised in that the support (6) is formed from two parallel rings (8) and (9) which form a collar, the lower ring (8) including a cross-piece (10) on which the bottom of the gas cylinder rests.

8. Apparatus according to claim 1, characterised in that the measuring container support is protected by a transparent domed hood (12).

## Patentansprüche

1. Selbständiges, tragbares Gerät zur Entnahme von Flüssigkeitsproben bei konstantem Druck aus Behältern, in denen man kohlensäurehaltige Getränke herstellt oder lagert, insbesondere aus Gärbehältern für Bier, wobei das Gerät ein Gestell in Form eines Dreifusses (3) besitzt und mitten ein geneigtes, Stammteil (5) aufweist, auf dessen Rückseite eine erste Haltevorrichtung (6) angebracht ist für eine Flasche (7) mit unter Druck stehendem inertem Gas, wobei das genannte Stammteil in der Mitte des Dreifusses angebracht ist und als Stütze für ein Messgefäss (20) dient und wobei das in der Mitte befindliche Stammteil nach oben durch ein Verteilerelement (16) verlängert ist, das mit einem Griff (15) abschliesst, dadurch gekennzeichnet, dass das Verteilerelement (16) die Form eines Blockes hat, der in seinem Innern eine Kammer (25) und in seinem oberen Teil zwei Hahnen (23, 24) für die Gaszufuhr bzw. für die Regulierung der zu entnehmenden Flüssigkeitsmenge enthält und welcher an seinen Seitenwänden mit einer Leitung für das Gas (29) und einer Leitung für die Flüssigkeit (30) versehen ist, um diese beiden über die Hahnen (23, 24) in das Messgefäss (20) zu transportieren und dadurch, dass die Innenkammer (25) den Ausgang des erwähnten Messgefässes (20) zum einen über ein pneumatisch gesteuertes Membranventil (38) und eine Abflussleitung (40) mit dem Abfluss und zum anderen über ein Drei-Wege-Druckventil (35) mit der Umgebung verbindet, wobei ein Weg die Innenkammer (25) mit dem pneumatisch gesteuerten Membranventil (38) verbindet und dadurch, dass das mitten befindliche Stammteil (5) auf der Vorderseite eine zweite Haltevorrichtung aufweist für das Messgefäss (20), wobei die erste Haltevorrichtung (6) auf der Rückseite des genannten, in der Mitte befindlichen Stammteiles (5) vorgesehen ist, und zwar für die Flasche mit inertem Gas für den Gasaustauschvorgang.

2. Gerät laut Anspruch 1, dadurch gekennzeichnet, dass das Ventil (38) ein Membranventil ist, welches die Menge und den Druck in der Abflussleitung (40) der Innenkammer (25) reguliert, und zwar durch pneumatische Steuerung der Membrane, ausgehend von der Innenkammer (25) über das Druckventil (35) und die Leitung (37).

3. Gerät laut Anspruch 1, dadurch gekennzeichnet, dass das Verteilerelement an seiner Unterseite einen Verschlusspfropfen (19) mit einem selbstdichtenden Ansatzstück besitzt, über welches der Hals des Messgefässes geschoben wird und dadurch, dass in die Mitte des Verschlusspfropfens ein Einfüllröhrchen (21) hineingesteckt ist und dass der Verschluss mit einem konzentrisch angebrachten Durchlass (22) versehen ist.

4. Gerät laut Anspruch 1 und 3, dadurch gekennzeichnet, dass das Messgefäss (20) gegen den Verschlusspfropfen (19) gedrückt wird mit Hilfe von Mitteln zum Andrücken, die aus einer verstellbaren Vorrichtung (44) zum näher Heranfahren und weiter Entfernen bestehen, welche in einer Platte oder einem Spazierstock ähnlichen Teil (45) endet, die zum leicht gewölbten Boden der Entnahmeflasche die Verbindung herstellen.

5. Gerät laut Anspruch 3, dadurch gekennzeichnet, dass die Länge des Einfüllröhrchens (21) ¾ von der gesamten Höhe der Probeentnahmeflasche ausmacht.

6. Gerät laut Anspruch 1, dadurch gekennzeichnet, dass zu der gemeinsamen Innenkammer (25) eine Messleitung hinzukommt, die in ein Manometer (42) mündet.

7. Gerät laut Anspruch 1, dadurch gekennzeichnet, dass die Haltevorrichtung (6) aus zwei parallelen Ringen (8) und (9) besteht, die eine Schelle bilden, wobei der untere Ring (8) eine Querverbindung (10) hat, auf welcher der Boden der Gasflasche aufsitzt.

8. Gerät laut Anspruch 1, dadurch gekennzeichnet, dass die Haltevorrichtung für das Messgefäss (20) durch eine durchsichtige, gewölbte Verkleidung (12) geschützt wird.

## FIG. 1

FIG.2

FIG.3

FIG.4

FIG. 5

FIG. 6 a

FIG. 6 b